# FASCICULE DE BREVET EUROPEEN

(11) **EP 3 151 708 B1**
(45) Date de publication et mention de la délivrance du brevet: **15.01.2020**
(21) Numéro de dépôt: 15733801.3
(22) Date de dépôt: 04.06.2015
(51) Int. Cl.: A47J 42/04, A47J 42/38, A47J 42/50

(54) **MOULIN POUR ASSAISONNEMENT AMÉLIORÉ**
MÜHLE ZUM VERBESSERTEN WÜRZEN
MILL FOR IMPROVED SEASONING

(30) Priorité: 04.06.2014 FR 1455065
(43) Date de publication de la demande: 12.04.2017
(73) Titulaire: Peugeot Saveurs, 25440 Quingey (FR)
(72) Inventeur: BOUGEROL, Richard, 25370 Metabief (FR); PIETRZYK, Jérémy, 01000 Bourg en Bresse (FR)
(74) Mandataire: Hugues, Catherine
(86) Numéro de dépôt international: PCT/FR2015/051485
(87) Numéro de publication internationale: WO 2015/185868

(56) Documents cités:
- AT-A4- 510 147
- BE-A- 530 442
- DE-U1-202011 100 534
- FR-A- 1 040 281
- FR-A1- 2 865 368

## Description

### Domaine technique et état de l'art

L'invention concerne un moulin pour assaisonnement, notamment pour sel humide, tel que par exemple le sel de Guérande, moulin du type comprenant un corps, un chapeau fermant le haut du corps, une cuvette fermant le bas du corps et une tige d'entraînement positionnée à l'intérieur du corps, une première extrémité de la tige d'entraînement étant solidaire d'une poire mobile en rotation à l'intérieur de la cuvette, la tige d'entraînement comprenant un dispositif de brassage de l'assaisonnement, ledit dispositif de brassage comprenant une première pale agencée pour pousser l'assaisonnement vers le bas en direction de ladite cuvette lorsque ladite tige est entraînée en rotation.

Un tel moulin est notamment décrit dans le document FR 2 865 368.

Le sel humide présente l'inconvénient d'avoir tendance à se colmater en particulier à l'intérieur du moulin, ce qui se traduit par une efficacité limitée du moulin. Pour remédier à cela, le document FR 2 865 368 propose un moulin dont la tige d'entraînement comprend un dispositif de brassage de l'assaisonnement, comprenant une pluralité d'encoches réparties le long de la tige.

On constate dans la pratique que l'efficacité des encoches décrites dans FR 2 865 368 est limitée. Si les agglomérats de sel sont effectivement cassés, au moins partiellement, la quantité de sel sortant à chaque tour de la poire du moulin reste assez faible.

Par ailleurs, la publication BE 530 442, portant sur des broyeurs et appareils à moudre perfectionnés, décrit une trémie d'alimentation prolongée à sa partie inférieure par un canal cylindrique formé par une vis hélicoïdale et débouchant immédiatement au-dessus des organes de broyage, mais ne présentant pas de dispositif de brassage équipé de pales. Un tel dispositif se révèle par conséquent insatisfaisant à l'usage en raison des problèmes de colmatage évoqué ci-dessus.

L'on connait également de la publication FR 1040 281 un moulin à poivre comprenant une « hélice de forçage » qui pousse de force les grains de poivre intacts vers l'intérieur du broyeur et qui comprend au minimum deux pales. Il s'avère à l'usage qu'un tel dispositif est bien adapté au broyage d'une épice sèche telle que le poivre, mais ne donne pas tout à fait satisfaction lorsqu'il est utilisé pour moudre un sel humide, tel que notamment du sel de Guérande.

### Description de l'invention

L'invention propose un nouveau moulin, plus efficace que celui des documents de l'état de la technique cités ci-dessus en ce qu'il améliore le rendement de la mouture.

Plus précisément, l'invention propose un moulin, par ailleurs conforme à un moulin tel que décrit dans le premier paragraphe ci-dessus, caractérisé en ce que ladite première pale est positionnée au voisinage de la première extrémité de ladite tige d'entraînement, et dans lequel une extrémité basse de ladite première pale a une forme agencée pour coopérer avec un bord supérieur de ladite cuvette, pour décoller des résidus d'assaisonnement agglomérés sur le bord supérieur de ladite cuvette, une extrémité d'un bord radial bas de la première pale présentant un décrochement.

La première pale casse les agglomérats d'assaisonnement présents en bas du corps du moulin. De plus, en poussant l'assaisonnement vers le bas en direction de la cuvette, la première pale facilite sa mouture ; le rendement du moulin est ainsi largement amélioré.

A cet, effet, selon l'invention, une extrémité d'un bord radial bas de la première pale présente un décrochement de forme complémentaire à une forme du bord supérieur de la cuvette.

En complément, le dispositif de brassage peut comprendre une pluralité de pales réparties le long de la tige d'entraînement ; lors de la rotation de la tige, la pluralité de pales casse les agglomérats d'épice à l'intérieur du corps et sur toute la hauteur du corps du moulin.

La poire présente sur sa paroi externe une pluralité de rainures, coopérant avec des rainures présentes sur une paroi interne de la cuvette pour moudre l'assaisonnement. Les rainures sur la paroi de la poire sont inclinées d'un angle moyen alpha de 30° à 60° par rapport à l'axe longitudinal de la tige, et les rainures sur la paroi de la cuvette sont inclinées selon un angle bien différent, par exemple d'un angle de 0° (correspondant à des rainures dans des plans parallèles à l'axe longitudinal) à - 60° ; ainsi, lors de la rotation de la poire dans la cuvette, les grains de l'assaisonnement sont écrasés entre la poire et la cuvette du fait de l'orientation des rainures de la poire bien distincte de l'orientation des rainures de la cuvette. Le sens de l'inclinaison des rainures de la poire définit le sens dans lequel l'axe d'entraînement doit être entraîné en rotation pour que le mécanisme de mouture soit efficace.

Dans un mode de réalisation pratique de l'invention, la première pale ou chaque pale de la pluralité de pales forme un angle beta dont la valeur est comprise dans le même quadrant angulaire que l'angle d'inclinaison alpha des rainures de la poire, par exemple un angle beta de 30 à 60° par rapport à un axe longitudinal de la tige. Grâce à cette inclinaison, assez proche de celle des rainures de la poire, la ou les pales poussent l'assaisonnement vers le bas lorsque la tige du moulin est entraînée en rotation dans le "bon" sens pour moudre.

Les pales 41, 45 peuvent être planes ; elles peuvent également être incurvées, avec de préférence une concavité tournées vers le bas ; l'effort de poussée exercé par les pales sur l'assaisonnement est ainsi amélioré.

De préférence, une distance entre la tige d'entraînement et un bord longitudinal d'une pale est inférieure à une distance entre la tige d'entraînement et une paroi interne du corps du moulin. Ainsi, la ou les pales ne frottent pas contre la paroi interne du corps du moulin, évitant ainsi de rayer la dite paroi.

Selon un mode de réalisation, le dispositif de brassage peut comprendre un tube comprenant une première pale ou une pluralité de pales disposées sur une paroi extérieure du tube, et un moyen pour immobiliser en rotation le dispositif de brassage par rapport à la tige lorsque le tube est monté sur la tige. Le dispositif de brassage et la tige d'entraînement sont ainsi deux pièces distinctes qui sont associées lors du montage du moulin. Le montage du moulin est ainsi facilité.

Selon une autre particularité d'un moulin selon l'invention, une face de dessous de la poire est prolongée par une pluralité d'ailettes : chaque ailette s'étend selon un axe radial et chaque ailette est agencée pour coopérer avec une face de dessous de la cuvette. La ou les ailettes forment une entretoise entre la poire et la cuvette et évitent ainsi tout frottement entre la poire et la cuvette ; de plus, une butée de centrage apporte un complément de guidage et d'appui. Ces particularités éliminent le risque d'effriter les dents formées par les rainures sur la paroi de la cuvette ou la paroi de la poire, dents particulièrement fines et donc fragiles ; ceci est notamment important dans le cas d'un mécanisme poire + cuvette réalisé en céramique, matériau friable et dangereux en cas d'ingestion.

Au moins une ailette peut présenter au moins un côté radial agencé pour coopérer avec la face de dessous de la cuvette, pour décoller des résidus d'assaisonnement agglomérés sur le bord supérieur de la cuvette.

### Brève description des figures

L'invention sera mieux comprise, et d'autres caractéristiques et avantages de l'invention apparaîtront à la lumière de la description qui suit d'un exemple d'un moulin selon l'invention. Ces exemples sont donnés à titre non limitatif. La description est à lire en relation avec les dessins annexés dans lesquels :
- la figure 1 est une vue en perspective éclatée d'un moulin selon l'invention,

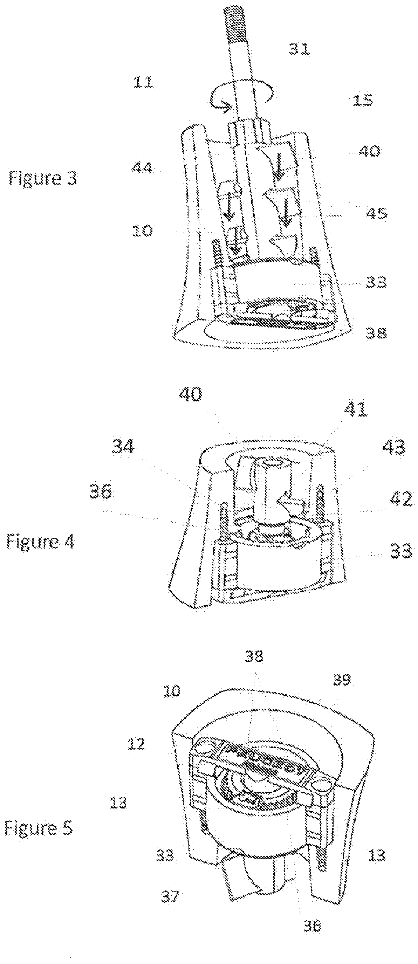

- les figures 2 à 5 sont des vues partielles du moulin assemblé, avec le corps découpé pour montrer les éléments positionnés à l'intérieur.

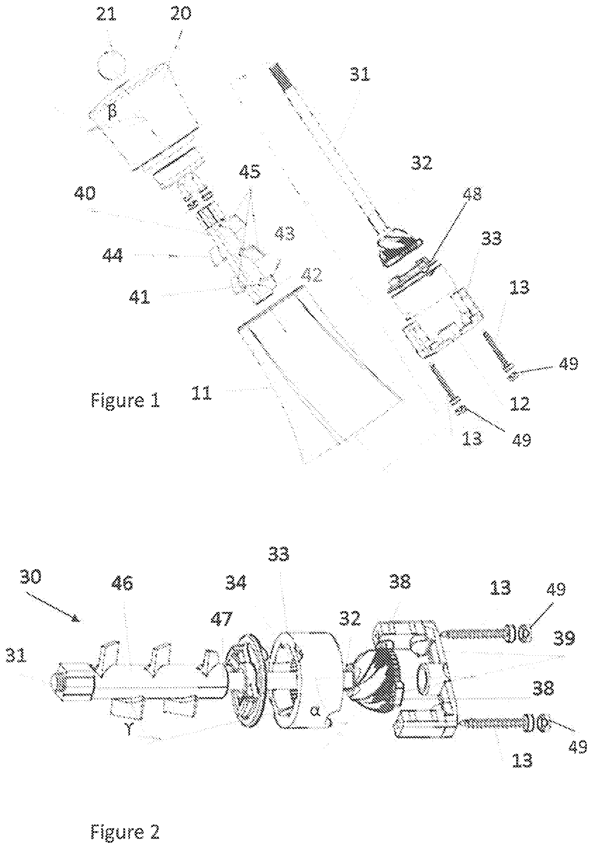

La position de référence du moulin est la position verticale, chapeau au-dessus du réservoir à assaisonnement et mécanisme de mouture (poire + cuvette) en-dessous du dit réservoir. Les notions "haut", "bas", "dessus", "dessous" sont définies par rapport à cette position de référence. L'axe longitudinal du moulin est l'axe de rotation de la tige d'entraînement de la poire, c'est à dire un axe vertical dans la position de référence du moulin. Pour la définition des angles, le sens positif de l'axe longitudinal est orienté depuis la poire en direction du chapeau du moulin (fig. 1).

### Description d'un mode de réalisation de l'invention

Comme dit précédemment, l'invention concerne un moulin pour assaisonnement, en particulier pour sel humide. Le moulin comprend un corps 10, un chapeau 20, une cuvette 33 et une tige 31.

Le chapeau 20 ferme le haut du corps. La cuvette 33 ferme le bas du corps, maintenue solidaire du corps par une bride 12 et des vis 13, par exemple en inox, et pouvant avantageusement être recouvertes chacune par un bouchon 49 en matériau plastique les protégeant de tous risques contre la corrosion. La tige 31 d'entraînement est positionnée à l'intérieur du corps ; une première extrémité de la tige d'entraînement est solidaire d'une poire 36 mobile en rotation à l'intérieur de la cuvette ; une deuxième extrémité de la tige est solidaire du chapeau. Une partie haute du corps 10 est creuse pour former un réservoir 11 à assaisonnement.

La poire 36 présente sur sa paroi externe une pluralité de rainures 37, coopérant avec des rainures 34 présentes sur une paroi interne de la cuvette 33 pour moudre l'assaisonnement. Dans l'exemple représenté, les rainures 37 sur la paroi de la poire sont inclinées d'un angle moyen alpha (α) de +20 à +40° environ par rapport à l'axe longitudinal de la tige (il s'agit en pratique de rainures situées sur une hélice d'un pas compris entre 40 et 60 mm), et les rainures 34 sur la paroi de la cuvette sont inclinées selon un angle qui peut être bien différent, par exemple d'un angle gamma (γ) moyen de +15 à +35° environ.

Les rainures 34, 37, peuvent être droites ; dans ce cas, l'angle d'inclinaison alpha est l'angle entre l'axe longitudinal de la tige d'entraînement et une droite tangente aux rainures. Dans l'exemple représenté, les rainures sont en forme d'arc de cercle ; dans ce cas, l'angle d'inclinaison *moyen* alpha, gamma d'une rainure est la valeur moyenne des angles entre l'axe longitudinal de la tige d'entraînement et les droites tangentes à la dite rainure en tout point de la courbe de la dite rainure.

Le sens de l'inclinaison des rainures de la poire est important car il définit le sens dans lequel l'axe d'entraînement doit être entraîné en rotation pour que le mécanisme de mouture soit efficace (flèche 15).

Dans l'exemple représenté, le dispositif de brassage comprend une pluralité de pales 45 réparties le long de la tige d'entraînement 31. La première pale 41 est positionnée au voisinage de la première extrémité de la tige d'entraînement, et un bord radial bas 42 de la première pale présente un décrochement 43. Les pales sont légèrement incurvées, avec une concavité tournée vers le bas, et sont inclinées selon un angle moyen beta (β) de l'ordre de 45°. Egalement, la distance entre la tige d'entraînement 31 et un bord longitudinal 44 d'une pale 41, 45 est inférieure de 0.2 à 2 mm à une distance entre la tige d'entraînement et une paroi interne du corps du moulin.

D'un point de vue réalisation pratique, le dispositif de brassage comprend un tube 46 sur la paroi extérieure duquel sont réparties la pluralité de pales 41, 45. Une extrémité du tube a une section interne carrée 47 et vient coopérer avec une section externe carrée 32 de la tige d'entraînement au voisinage de la poire. Ceci forme un moyen pour immobiliser en rotation le dispositif de brassage par rapport à la tige lorsque le tube est monté sur la tige.

Dans le moulin représenté, la poire 36 a une forme générale tronconique ; une face de dessous de la poire est prolongée par trois ailettes 38 réparties sur le périmètre de la face de dessous de la poire ; les ailettes 38 forment entretoise entre la poire 36 et la cuvette 33 ; chaque ailette s'étend selon un axe radial ; chaque ailette est au contact avec une face de dessous de la cuvette lorsque le moulin est monté. Les ailettes présentent au moins un côté radial 39, formant ainsi une lame pour nettoyer la face de dessous de la cuvette. Par ailleurs, une butée de centrage 48 apporte un complément de guidage et d'appui.

Les prototypes de moulin et les moulins selon l'invention sont et seront entièrement en des matériaux non ou peu sujets à la corrosion, notamment mais non exclusivement :
- le plastique, le bois, etc., pour le corps et le chapeau du moulin
- la céramique pour la poire et la cuvette,
- le plastique pour la tige, plastique surmoulé sur la poire
- le plastique pour la bride et les bouchons de vis, l'inox pour les vis de fixation de la bride
- le plastique, le bois, l'inox, etc. pour le bouton

### NOMENCLATURE

- 10: corps
- 11: réservoir
- 12: bride
- 13: vis
- 15: sens de rotation pour moudre
- 20: chapeau
- 21: bouton
- 30: mécanisme de mouture
- 31: tige d'entraînement
- 32: section carrée en bas de la tige
- 33: cuvette
- 34: rainures
- γ, gamma,: orientation des rainures 34
- 36: poire
- 37: rainures
- α,: alpha, orientation des rainures 37
- 38: ailettes
- 39: côté radial des ailettes
- 40: dispositif de brassage
- 41: première pale
- 42: bord radial bas
- 43: décrochement
- 44: bord longitudinal
- 45: pluralité de pales
- β, beta: orientation des pales
- 46: tube
- 47: section carrée du tube
- 48: butée de centrage
- 49: bouchons

## Revendications

1. Moulin pour assaisonnement, en particulier pour sel humide, moulin comprenant un corps (10), un chapeau (20) fermant le haut du corps, une cuvette (33) fermant le bas dudit corps et une tige d'entraînement (31) positionnée à l'intérieur dudit corps, une première extrémité de ladite tige d'entraînement étant solidaire d'une poire (36) mobile en rotation à l'intérieur de ladite cuvette, ladite tige d'entraînement comprenant un dispositif de brassage de l'assaisonnement, ledit dispositif de brassage (40) comprenant une première pale (41) agencée pour pousser l'assaisonnement vers le bas en direction de ladite cuvette lorsque ladite tige est entraînée en rotation, ladite première pale étant positionnée au voisinage de la première extrémité de ladite tige d'entraînement, une extrémité basse de ladite première pale (41) ayant une forme agencée pour coopérer avec un bord supérieur de ladite cuvette, pour décoller des résidus d'assaisonnement agglomérés sur le bord supérieur de ladite cuvette, caractérisé en ce qu'une extrémité d'un bord radial bas (42) de la première pale présente un décrochement (43).

2. Moulin selon la revendication 1 dans lequel le dispositif de brassage comprend une pluralité de pales (45) réparties le long de la tige d'entraînement.

3. Moulin selon l'une des revendications précédentes dans lequel la première pale (41) ou chaque pale de la pluralité de pale (45) forme un angle de 30 à 60° par rapport à un axe longitudinal de la tige.

4. Moulin selon l'une des revendications précédentes dans lequel la poire (36) présente sur sa paroi externe une pluralité de rainures (37) inclinées selon un angle moyen de 30 à 60° par rapport à l'axe longitudinal de la tige.

5. Moulin selon l'une des revendications précédentes dans lequel une distance entre la tige d'entraînement (31) et un bord longitudinal (44) d'une pale est inférieure à une distance entre la tige d'entraînement et une paroi interne du corps du moulin.

6. Moulin selon l'une des revendications précédentes dans lequel le dispositif de brassage comprend un tube comprenant une première pale ou une pluralité de pales disposées sur une paroi extérieure du tube, et un moyen pour immobiliser en rotation le dispositif de brassage par rapport à la tige lorsque le tube est monté sur la tige.

7. Moulin selon l'une des revendications précédentes dans lequel la poire a une forme générale tronconique et dans lequel une face de dessous de la poire est prolongée par une pluralité d'ailettes formant entretoise entre la poire et la cuvette, chaque ailette s'étendant selon un axe radial, chaque ailette étant agencée pour coopérer avec une face de dessous de la cuvette.

8. Moulin selon la revendication 7, dans lequel au moins une ailette présente au moins un côté radial, agencé pour coopérer avec la face de dessous de la cuvette pour décoller des résidus d'assaisonnement agglomérés sur le bord supérieur de la cuvette.

9. Moulin selon l'une des revendications précédentes réalisé entièrement en des matériaux non ou peu sujets à la corrosion.

## Patentansprüche

1. Gewürzmühle, vor allem für feuchtes Salz, wobei die Mühle einen Körper (10), eine Abdeckung (20), die den Körper oben verschließt, eine Wanne (33), die den Körper unten verschließt, und eine Antriebsstange (31) umfasst, die im Inneren des Körpers positioniert ist, wobei ein erstes Ende der Antriebsstange mit einer im Inneren der Wanne rotatorisch beweglichen Birne (36) fest verbunden ist, wobei die Antriebsstange eine Rührvorrichtung des Gewürzes umfasst, wobei die Rührvorrichtung (40) eine erste Schaufel (41) umfasst, die eingerichtet ist, um das Gewürz nach unten in Richtung der Wanne zu drücken, wenn die Stange rotierend angetrieben wird, wobei die erste Schaufel in der Nähe des ersten Endes der Antriebsstange positioniert ist, wobei ein unteres Ende der ersten Schaufel (41) eine Form hat, die eingerichtet ist, um mit einem oberen Rand der Wanne zusammenzuwirken, um auf dem oberen Rand der Wanne verdichtete Gewürzrückstände zu lösen, **dadurch gekennzeichnet, dass** ein Ende eines unteren radialen Randes (42) der ersten Schaufel einen Absatz (43) aufweist.

2. Mühle nach Anspruch 1, wobei die Rührvorrichtung eine Vielzahl von Schaufeln (45) umfasst, die entlang der Antriebsstange verteilt sind.

3. Mühle nach einem der vorangehenden Ansprüche, wobei die erste Schaufel (41) oder jede Schaufel der Vielzahl von Schaufeln (45) einen Winkel von 30 bis 60° in Bezug auf eine Längsachse der Stange bildet.

4. Mühle nach einem der vorangehenden Ansprüche, wobei die Birne (36) auf ihrer Außenwand eine Vielzahl von Rillen (37) aufweist, die gemäß einem mittleren Winkel von 30 bis 60° in Bezug auf die Längsachse der Stange geneigt sind.

5. Mühle nach einem der vorangehenden Ansprüche, wobei ein Abstand zwischen der Antriebsstange (31) und einem Längsrand (44) einer Schaufel kleiner als ein Abstand zwischen der Antriebsstange und einer Innenwand des Körpers der Mühle ist.

6. Mühle nach einem der vorangehenden Ansprüche, wobei die Rührvorrichtung ein Rohr umfasst, umfassend eine erste Schaufel oder eine Vielzahl von Schaufeln, die auf einer Außenwand des Rohrs angeordnet sind, und ein Mittel, um die Rührvorrichtung in Bezug auf die Stange zu blockieren, wenn das Rohr auf der Stange angebracht ist.

7. Mühle nach einem der vorangehenden Ansprüche, wobei die Birne eine allgemein kegelstumpfförmige Form hat und wobei eine Unterseite der Birne von einer Vielzahl von Flügeln verlängert wird, die einen Abstandshalter zwischen der Birne und der Wanne bilden, wobei sich jeder Flügel gemäß einer radialen Achse erstreckt, wobei jeder Flügel eingerichtet ist, um mit einer Unterseite der Wanne zusammenzuwirken.

8. Mühle nach Anspruch 7, wobei mindestens ein Flügel mindestens eine radiale Seite aufweist, die eingerichtet ist, um mit der Unterseite der Wanne zusammenzuwirken, um auf dem oberen Rand der Wanne verdichtete Gewürzrückstände zu lösen.

9. Mühle nach einem der vorangehenden Ansprüche, die vollständig aus Materialien hergestellt ist, die nicht oder wenig korrodieren.

## Claims

1. A mill for seasoning, in particular for wet salt, the mill comprising a body (10), a cap (20) closing the top of the body, a cup (33) closing the bottom of said body and a driving rod (31) positioned inside said body, a first end of said driving rod being secured to a ball (36) rotatable inside said cup, said driving rod comprising a stirring device for the seasoning, said stirring device (40) comprising a first blade (41) arranged to push the seasoning downward toward said cup when said rod is rotated, said first blade being positioned near the first end of said driving rod, a lower end of said first blade (41) having a shape arranged to cooperate with an upper edge of said cup, to loosen seasoning residues clumped on the upper edge of said cup, **characterized in that** one end of a bottom radial edge (42) of the first blade has a recess (43).

2. The mill according to claim 1, wherein the stirring device comprises a plurality of blades (45) distributed along the driving rod.

3. The mill according to one of the preceding claims, wherein the first blade (41) or each blade of the plurality of blades (45) forms an angle from 30 to 60° relative to a longitudinal axis of the rod.

4. The mill according to one of the preceding claims, wherein the ball (36) has, on its outer wall, a plurality of grooves (37) inclined by an average angle of 30 to 60° relative to the longitudinal axis of the rod.

5. The mill according to one of the preceding claims, wherein a distance between the driving rod (31) and a longitudinal edge (44) of a blade is smaller than a distance between the driving rod and an inner wall of the body of the mill.

6. The mill according to one of the preceding claims, wherein the stirring device comprises a tube comprising a first blade or a plurality of blades arranged on an outer wall of the tube, and a means for immobilizing the rotation of the stirring device relative to the rod when the tube is mounted on the rod.

7. The mill according to one of the preceding claims, wherein the ball has a generally frustoconical shape and wherein a bottom face of the ball is extended by a plurality of fins forming a spacer between the ball and the cup, each fin extending along a radial axis, each fin being arranged to cooperate with a bottom face of the cup.

8. The mill according to claim 7, wherein at least one fin has at least one radial side, arranged to cooperate with the bottom face of the cup to loosen clumps of seasoning residues from the upper edge of the cup.

9. The mill according to one of the preceding claims, made completely from materials subject to little or no corrosion.
